# EUROPÄISCHE PATENTSCHRIFT

(11) **EP 3 625 628 B1**
(45) Veröffentlichungstag und Bekanntmachung des Hinweises auf die Patenterteilung: **31.03.2021**
(21) Anmeldenummer: 19723720.9
(22) Anmeldetag: 02.05.2019
(51) Int. Cl.: G05B 19/19

(54) **REGLERSTRUKTUR FÜR GEMISCHT DIREKTEN/INDIREKTEN ANTRIEB EINES MASCHINENELEMENTS**
REGULATOR STRUCTURE FOR MIXED DIRECT / INDIRECT DRIVE OF A MACHINE ELEMENT
STRUCTURE DE RÉGULATEUR POUR ENTRAÎNEMENT MIXTE DIRECT / INDIRECT D'UN ÉLÉMENT DE MACHINE

(30) Priorität: 16.05.2018 EP 18172646
(43) Veröffentlichungstag der Anmeldung: 25.03.2020
(73) Patentinhaber: Siemens Aktiengesellschaft, 80333 München (DE)
(72) Erfinder: BITTEROLF, David, 91056 Erlangen (DE); TAUCHMANN, Sven, 09127 Chemnitz (DE)
(86) Internationale Anmeldenummer: PCT/EP2019/061277
(87) Internationale Veröffentlichungsnummer: WO 2019/219398

(56) Entgegenhaltungen:
- DE-B3-102014 005 664
- US-A1- 2010 171 458

## Beschreibung

Die vorliegende Erfindung geht aus von einer Reglerstruktur für einen ersten und einen zweiten Antrieb, wobei der erste Antrieb direkt auf ein Maschinenelement wirkt und der zweite Antrieb über eine Übersetzungseinrichtung auf das Maschinenelement wirkt,
- wobei die Reglerstruktur einen Lageregler umfasst, der mit einem Lageregeltakt jeweils einen Lagesollwert und einen Lageistwert des Maschinenelements entgegennimmt und den zweiten Antrieb in Abhängigkeit von dem jeweiligen Lagesollwert und dem jeweiligen Lageistwert ansteuert,
- wobei die Reglerstruktur einen ersten Geschwindigkeitsregler umfasst, der mit einem ersten Geschwindigkeitsregeltakt jeweils einen resultierenden Geschwindigkeitssollwert und einen Geschwindigkeitsistwert des Maschinenelements entgegennimmt, anhand des jeweiligen resultierenden Geschwindigkeitssollwerts und des jeweiligen Geschwindigkeitsistwerts des Maschinenelements jeweils einen ersten Kraftsollwert für den ersten Antrieb ermittelt und den ersten Antrieb in Abhängigkeit von dem jeweiligen ersten Kraftsollwert ansteuert,
- wobei die Reglerstruktur eine erste Ermittlungseinrichtung aufweist, die den jeweiligen resultierenden Geschwindigkeitssollwert ermittelt und an den ersten Geschwindigkeitsregler ausgibt.

Die vorliegende Erfindung geht weiterhin aus von einer Steuereinrichtung für einen ersten und einen zweiten Antrieb, wobei der erste Antrieb direkt auf ein Maschinenelement wirkt und der zweite Antrieb über eine Übersetzungseinrichtung auf das Maschinenelement wirkt,
- wobei die Steuereinrichtung eine übergeordnete Steuerung und eine Reglerstruktur aufweist,
- wobei die übergeordnete Steuerung der Reglerstruktur mit einem Lageregeltakt Lagesollwerte vorgibt,
- wobei die Reglerstruktur so wie oben erläutert ausgebildet ist.

Die vorliegende Erfindung geht weiterhin aus von einer Maschine,
- wobei die Maschine ein Maschinenelement, einen ersten Antrieb, einen zweiten Antrieb und eine Übersetzungseinrichtung aufweist,
- wobei der erste Antrieb direkt auf das Maschinenelement wirkt und der zweite Antrieb über die Übersetzungseinrichtung auf das Maschinenelement wirkt,
- wobei der erste Antrieb und der zweite Antrieb von einer derartigen Steuereinrichtung gesteuert werden.

Maschinenachsen bestehen aus in der Regel aus einem Antrieb, einer Übersetzungseinrichtung und einem Maschinenelement. Der Antrieb wirkt in diesem Fall über die Übersetzungseinrichtung auf das Maschinenelement. Nachteilig ist bei dieser Anordnung, dass die Übersetzungseinrichtung eine relativ niedrige Steifigkeit aufweist und daher zumindest die Dynamik, in vielen Fällen auch die Positioniergenauigkeit des Maschinenelements relativ niedrig ist.

Aus der EP 2 174 748 A1 sind eine Reglerstruktur, eine Steuereinrichtung und eine Maschine der eingangs genannten Art bekannt. Bei dieser Ausgestaltung der Maschinenachse ist es bei geeigneter Auslegung der Ansteuerung des ersten Antriebs und des zweiten Antriebs möglich, das Maschinenelement mit hoher Dynamik und hoher Positioniergenauigkeit zu positionieren. Insbesondere kann der erste Antrieb zur Übertragung von hochfrequenten Kraftanteilen und zur Dämpfung prozessnaher Schwingungen genutzt werden, während der zweite Antrieb hohe statische und niederfrequente Belastungen übernehmen kann. Über die nähere Ausgestaltung der Reglerstruktur ist der EP 2 174 748 A1 hingegen nichts zu entnehmen.

Aus der US 2010/0 171 458 A1 ist eine Reglerstruktur für einen ersten und einen zweiten Antrieb bekannt, wobei der erste Antrieb und der zweite Antrieb über eine jeweilige Übersetzungseinrichtung auf das Maschinenelement wirken, wobei die Reglerstruktur einen Lageregler umfasst, der mit einem Lageregeltakt jeweils einen Lagesollwert und einen Lageistwert des Maschinenelements entgegennimmt und den zweiten Antrieb in Abhängigkeit von dem jeweiligen Lagesollwert und dem jeweiligen Lageistwert ansteuert, wobei die Reglerstruktur einen ersten Geschwindigkeitsregler umfasst, der mit einem ersten Geschwindigkeitsregeltakt jeweils einen resultierenden Geschwindigkeitssollwert und einen Geschwindigkeitsistwert des Maschinenelements entgegennimmt, anhand des jeweiligen resultierenden Geschwindigkeitssollwerts und des jeweiligen Geschwindigkeitsistwerts des Maschinenelements jeweils einen ersten Kraftsollwert für den ersten Antrieb ermittelt und den ersten Antrieb in Abhängigkeit von dem jeweiligen ersten Kraftsollwert ansteuert, wobei die Reglerstruktur eine erste Ermittlungseinrichtung aufweist, die den jeweiligen resultierenden Geschwindigkeitssollwert ermittelt und an den ersten Geschwindigkeitsregler ausgibt, wobei der Lageregler anhand des jeweiligen Lagesollwerts und des jeweiligen Lageistwerts jeweils einen Geschwindigkeitssollwert für das Maschinenelement ermittelt und den jeweiligen Geschwindigkeitssollwert als Ausgangssignal ausgibt, wobei die Reglerstruktur einen zweiten Geschwindigkeitsregler umfasst, der mit einem zweiten Geschwindigkeitsregeltakt jeweils den vom Lageregler ausgegebenen Geschwindigkeitssollwert und einen Geschwindigkeitsistwert des zweiten Antriebs entgegennimmt, anhand dieses Geschwindigkeitssollwerts und des jeweiligen Geschwindigkeitsistwerts des zweiten Antriebs jeweils einen zweiten Kraftsollwert für den zweiten Antrieb ermittelt und den zweiten Antrieb in Abhängigkeit von dem jeweiligen zweiten Kraftsollwert ansteuert.

Der DE 10 2014 005 664 B3 ist ein im wesentlichen gleichgelagerter Sachverhalt zu entnehmen.

Die Aufgabe der vorliegenden Erfindung besteht somit darin, Möglichkeiten zu schaffen, mittels derer das Potenzial, welche die Antriebsstruktur der EP 2 174 748 A1 bietet, möglichst gut ausgeschöpft werden kann.

Die Aufgabe wird zunächst durch eine Reglerstruktur mit den Merkmalen des Anspruchs 1 gelöst. Vorteilhafte Ausgestaltungen der Reglerstruktur sind Gegenstand der abhängigen Ansprüche 2 bis 7.

Erfindungsgemäß wird eine Reglerstruktur der eingangs genannten Art dadurch ausgestaltet,
- dass der Lageregler anhand des jeweiligen Lagesollwerts und des jeweiligen Lageistwerts jeweils einen Geschwindigkeitssollwert für das Maschinenelement ermittelt und den jeweiligen Geschwindigkeitssollwert als Ausgangssignal ausgibt,
- dass die Reglerstruktur einen zweiten Geschwindigkeitsregler umfasst, der mit einem zweiten Geschwindigkeitsregeltakt jeweils den resultierenden Geschwindigkeitssollwert und einen Geschwindigkeitsistwert des zweiten Antriebs entgegennimmt, anhand des jeweiligen resultierenden Geschwindigkeitssollwerts und des jeweiligen Geschwindigkeitsistwerts des zweiten Antriebs jeweils einen zweiten Kraftsollwert für den zweiten Antrieb ermittelt und den zweiten Antrieb in Abhängigkeit von dem jeweiligen zweiten Kraftsollwert ansteuert,
- dass die erste Ermittlungseinrichtung den jeweiligen Geschwindigkeitssollwert entgegennimmt, unter Verwendung des jeweiligen Geschwindigkeitssollwerts den jeweils resultierenden Geschwindigkeitssollwert ermittelt und
- dass die erste Ermittlungseinrichtung den jeweiligen resultierenden Geschwindigkeitssollwert zusätzlich zum ersten Geschwindigkeitsregler auch an den zweiten Geschwindigkeitsregler ausgibt.

Durch die Ermittlung des resultierenden Geschwindigkeitssollwerts in Abhängigkeit von sowohl dem Lagesollwert als auch dem Lageistwert - insbesondere in Abhängigkeit von der Differenz von Lagesollwert und Lageistwert - kann insbesondere erreicht werden, dass der erste Antrieb auch bei Störungen, die sich im Lagesollwert nicht bemerkbar machen, mit hoher Dynamik die Korrektur derartiger Störungen unterstützt.

In einer bevorzugten Ausgestaltung der Reglerstruktur ist vorgesehen, dass die erste Ermittlungseinrichtung weiterhin einen jeweiligen Geschwindigkeits-Vorsteuerwert entgegennimmt und den jeweils resultierenden Geschwindigkeitssollwert als Summe des jeweiligen Geschwindigkeitssollwerts und des jeweiligen Geschwindigkeit-Vorsteuerwerts ermittelt. Durch diese Ausgestaltung kann die Dynamik bei der Positionierung des Maschinenelements noch weiter verbessert werden.

In einer weiteren bevorzugten Ausgestaltung der Reglerstruktur ist vorgesehen, dass die Reglerstruktur eine zweite Ermittlungseinrichtung aufweist, die mit einem Vorsteuertakt jeweils einen Beschleunigungs-Vorsteuerwert entgegennimmt, anhand des jeweiligen Beschleunigungs-Vorsteuerwerts einen jeweiligen ersten Kraft-Vorsteuerwert für den ersten Antrieb ermittelt und den jeweiligen ersten Kraft-Vorsteuerwert an eine erste Additionseinrichtung ausgibt, welche den jeweiligen ersten Kraft-Vorsteuerwert zum jeweiligen ersten Kraftsollwert addiert, so dass der erste Antrieb entsprechend der Summe des jeweiligen ersten Kraft-Vorsteuerwerts und des jeweiligen ersten Kraftsollwerts angesteuert wird. Durch diese Ausgestaltung kann die Dynamik bei der Positionierung des Maschinenelements insbesondere bei Änderungen des Lagesollwertes - die in der Regel vorab bekannt sind - verbessert werden.

Vorzugsweise weist die zweite Ermittlungseinrichtung eine Anpassungseinrichtung auf, die den jeweiligen Beschleunigungs-Vorsteuerwert in einen vorläufigen Kraft-Vorsteuerwert umsetzt. Die zweite Ermittlungseinrichtung ermittelt in diesem Fall den jeweiligen ersten Kraft-Vorsteuerwert anhand des jeweiligen vorläufigen Kraft-Vorsteuerwerts.

Vorzugsweise ermittelt die zweite Ermittlungseinrichtung den jeweiligen ersten Kraft-Vorsteuerwert durch Hochpassfilterung des jeweiligen vorläufigen Kraft-Vorsteuerwerts. Dadurch kann die Dynamik beim Positionieren des Maschinenelements noch weiter gesteigert werden.

In einer besonders bevorzugten Ausgestaltung der Reglerstruktur ist vorgesehen, dass die zweite Ermittlungseinrichtung anhand des jeweiligen vorläufigen Kraft-Vorsteuerwerts - zusätzlich zum jeweiligen ersten Kraft-Vorsteuerwert - auch einen jeweiligen zweiten Kraft-Vorsteuerwert für den zweiten Antrieb ermittelt. In diesem Fall gibt die zweite Ermittlungseinrichtung den jeweiligen zweiten Kraft-Vorsteuerwert an eine zweite Additionseinrichtung aus, welche den jeweiligen zweiten Kraft-Vorsteuerwert zum jeweiligen zweiten Kraftsollwert addiert, so dass der zweite Antrieb entsprechend der Summe des jeweiligen zweiten Kraft-Vorsteuerwerts und des jeweiligen zweiten Kraftsollwerts angesteuert wird. Dadurch kann die vom zweiten Antrieb erreichte Dynamik beim Positionieren des Maschinenelements gesteigert werden, so dass die resultierende Belastung des ersten Antriebs reduziert wird.

Vorzugsweise ermittelt die zweite Ermittlungseinrichtung den jeweiligen zweiten Kraft-Vorsteuerwert durch Tiefpassfilterung des jeweiligen vorläufigen Kraft-Vorsteuerwerts. Dadurch wird ohne nennenswerte Einbuße bei der Entlastung des ersten Antriebs der zweite Antrieb so wenig wie möglich belastet.

Die Aufgabe wird weiterhin durch eine Steuereinrichtung mit den Merkmalen des Anspruchs 8 gelöst. Erfindungsgemäß ist die Reglerstruktur der Steuereinrichtung als erfindungsgemäße Reglerstruktur ausgebildet.

Die Aufgabe wird weiterhin durch eine Maschine mit den Merkmalen des Anspruchs 9 gelöst. Eine vorteilhafte Ausgestaltung der Maschine ist Gegenstand des abhängigen Anspruchs 10. Erfindungsgemäß werden der erste Antrieb und der zweite Antrieb von einer erfindungsgemäßen Steuereinrichtung gesteuert.

In der bevorzugten Ausgestaltung der Maschine ist die Maschine als Werkzeugmaschine, als Produktionsmaschine oder als Roboter ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
FIG 1 ein Beispiel einer Maschine,
FIG 2 eine Reglerstruktur mit Steuerung und
FIG 3 eine mögliche Ausgestaltung von FIG 2.

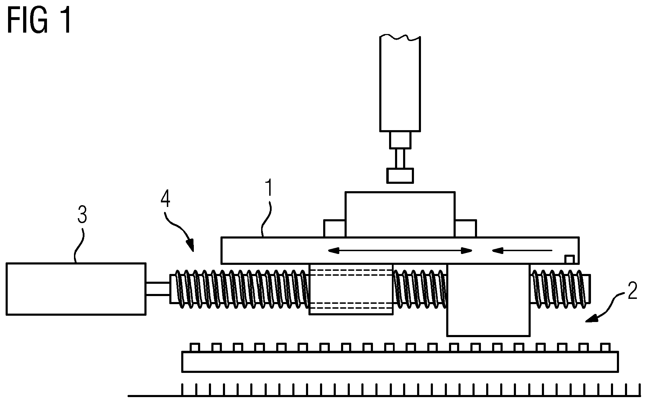

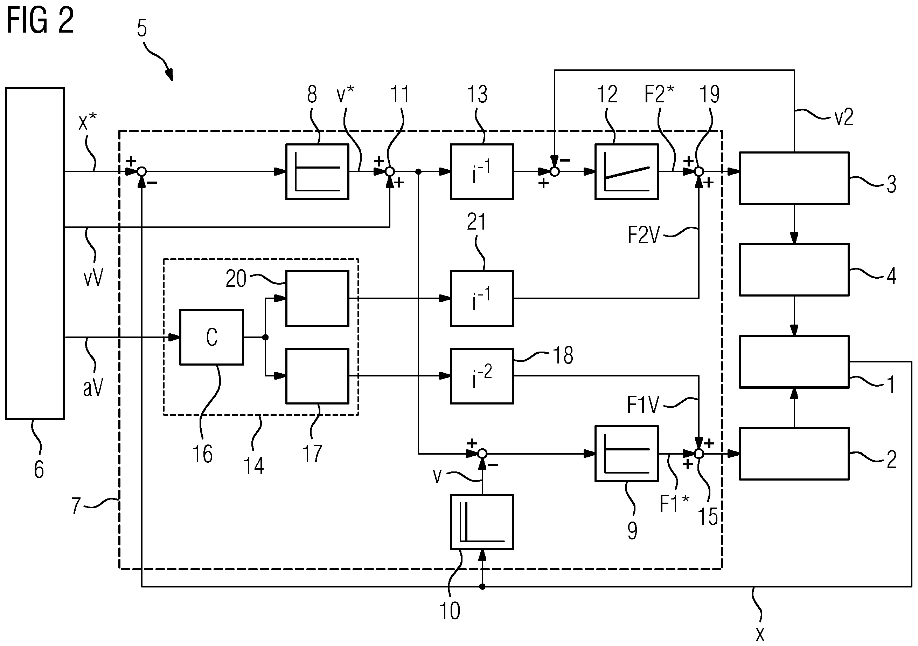

Gemäß den FIG 1 und 2 weist eine Maschine ein Maschinenelement 1 auf. Das Maschinenelement 1 kann beispielsweise entsprechend der Darstellung in FIG 1 ein Werkstücktisch sein. In diesem Fall kann die Maschine beispielsweise als Werkzeugmaschine ausgebildet sein. Alternativ kann es sich bei dem Maschinenelement 1 beispielsweise um einen Greifarm handeln. In diesem Fall kann die Maschine beispielsweise als Produktionsmaschine ausgebildet sein. Alternativ kann es sich bei dem Maschinenelement 1 um ein Teil eines Roboters handeln. Entsprechend der Darstellung in FIG 1 ist das Maschinenelement 1 translatorisch verfahrbar. Das Maschinenelement 1 könnte aber auch rotatorisch verdrehbar bzw. verschwenkbar sein.

Das Maschinenelement 1 wird über einen ersten Antrieb 2 bewegt. Der erste Antrieb 2 wirkt direkt auf das Maschinenelement 1. "Direkt" bedeutet, dass der erste Antrieb 2 ohne zwischengeordnete Übersetzungseinrichtung auf das Maschinenelement 1 wirkt. Der erste Antrieb 2 kann beispielsweise entsprechend der Darstellung in FIG 1 als Linearantrieb ausgebildet sein, also als sich translatorisch bewegender Antrieb. Wenn in diesem Fall der erste Antrieb 2 um eine beliebige Strecke verfahren wird, beispielsweise um 10 mm, wird auch das Maschinenelement 1 um genau die gleiche Strecke verfahren, gemäß dem genannten Beispiel also um 10 mm. Der erste Antrieb 2 kann aber bei anderen Ausgestaltungen der vorliegenden Erfindung als rotatorischer Antrieb ausgebildet sein, insbesondere als sogenannter Torque-Motor. Wenn bei einer Ausgestaltung als rotatorischer Antrieb der erste Antrieb 2 um einen beliebigen Winkel rotiert wird, beispielsweise um 20°, wird auch das Maschinenelement 1 um genau den gleichen Winkel rotiert, gemäß dem genannten Beispiel also um 20°.

Das Maschinenelement 1 wird weiterhin über einen zweiten Antrieb 3 bewegt. Der zweite Antrieb 3 wirkt über eine Übersetzungseinrichtung 4 auf das Maschinenelement 1. Die Übersetzungseinrichtung 4 kann beispielsweise als Getriebe, als Gewindespindel oder als Kugelgewindetrieb ausgebildet sein. Auch andere Ausgestaltungen sind möglich. Eine Übersetzung i der Übersetzungseinrichtung 4 kann konstant sein oder von einem Lageistwert x des Maschinenelements 1 abhängen. Entsprechend der Darstellung in FIG 1 kann der zweite Antrieb 3 beispielsweise als rotatorischer Antrieb ausgebildet sein. Wenn in diesem Fall der zweite Antrieb 3 um einen beliebigen Winkel rotiert wird, beispielsweise um 360°, wird das Maschinenelement 1 im Falle einer translatorischen Bewegung des Maschinenelements 1 um eine Strecke verfahren, welche durch die Übersetzung i der Übersetzungseinrichtung 4 bestimmt ist, beispielsweise durch die Steigung einer Gewindespindel oder eines Kugelgewindetriebs. Auch wenn das Maschinenelement 1 bei einem Rotieren des zweiten Antriebs 3 ebenfalls rotiert wird, stimmt bei einem Rotieren des zweiten Antriebs 3 um einen bestimmten Drehwinkel, beispielsweise 20°, der Drehwinkel, um den das Maschinenelement 1 gedreht wird, nur ausnahmsweise - nämlich bei einer Übersetzung i von 1 - mit dem Drehwinkel überein, um den das Maschinenelement gedreht wird. Im Regelfall wird das Maschinenelement 1 um einen anderen Drehwinkel gedreht, beispielsweise bei einer Übersetzung i von 2,5 um 50°. In seltenen Ausnahmefällen kann der zweite Antrieb 3 auch als Linearantrieb ausgebildet sein. Auch in diesem Fall wirkt er jedoch über die Übersetzungseinrichtung 4 auf das Maschinenelement 1.

Der erste Antrieb 2 und der zweite Antrieb 1 werden von einer Steuereinrichtung 5 gesteuert. Die Steuereinrichtung 5 umfasst gemäß FIG 2 eine übergeordnete Steuerung 6 und eine Reglerstruktur 7. Die übergeordnete Steuerung 6 kann beispielsweise als numerische Steuerung, als Robotersteuerung oder als MC-Steuerung (motion control) ausgebildet sein. Die Ausgestaltung der Reglerstruktur 7 ist der Kerngegenstand der vorliegenden Erfindung.

Gemäß FIG 2 umfasst die Reglerstruktur 7 einen Lageregler 8. Der Lageregler 8 kann entsprechend der Darstellung in FIG 2 insbesondere als P-Regler ausgebildet sein, also als Proportional-Regler. Der Lageregler 8 nimmt von der übergeordneten Steuerung 6 einen Lagesollwert x* entgegen. Der Lageregler 8 nimmt weiterhin von einer Messeinrichtung (in den FIG nicht dargestellt) einen Lageistwert x des Maschinenelements 1 entgegen. Das Entgegennehmen des Lagesollwerts x* und des Lageistwerts x erfolgt mit einem Lageregeltakt. Mit jedem Lageregeltakt nimmt der Lageregler 8 also einen neuen Lagesollwert x* und einen neuen Lageistwert x des Maschinenelements 1 entgegen. Der Lageregeltakt liegt meist im Bereich von etwa 1 ms oder etwas darunter, beispielsweise bei 250 µs, 500 µs, 1 ms oder 2 ms.

Der Lageregler 8 ermittelt anhand des jeweiligen Lagesollwerts x* und des jeweiligen Lageistwerts x - insbesondere anhand der Differenz von jeweiligem Lagesollwert x* und jeweiligem Lageistwert x - jeweils einen Geschwindigkeitssollwert v* für das Maschinenelement 1. Der Begriff "anhand" soll bedeuten, dass die in Verbindung mit dem Begriff "anhand" genannten Größen alle Größen sind, die als Variable in die Ermittlung der jeweils genannten ermittelten Größe eingehen. Im konkreten Beispiel ist also der jeweilige Geschwindigkeitssollwert v* zwar vom jeweiligen Lagesollwert x* und vom jeweiligen Lageistwert x abhängig, nicht aber von anderen variablen Größen. Der Begriff "anhand" steht somit im Gegensatz zu den Begriffen "in Abhängigkeit von" und "unter Verwendung von". Diese Begriffe sollen bedeuten, dass die jeweils ermittelte Größe zwar von den jeweils genannten Eingangsgrößen abhängig ist, dass aber nicht ausgeschlossen ist, dass auch Abhängigkeiten von anderen variablen Größen bestehen. Den jeweils ermittelten Geschwindigkeitssollwert v* gibt der Lageregler 8 mit dem Lageregeltakt aus.

Gemäß FIG 2 umfasst die Reglerstruktur 7 weiterhin einen ersten Geschwindigkeitsregler 9. Der erste Geschwindigkeitsregler 9 kann beispielsweise entsprechend der Darstellung in FIG 2 als P-Regler ausgebildet sein. Der erste Geschwindigkeitsregler 9 nimmt mit einem ersten Geschwindigkeitsregeltakt jeweils einen resultierenden Geschwindigkeitssollwert und einen Geschwindigkeitsistwert v des Maschinenelements 1 entgegen. Das Entgegennehmen des resultierenden Geschwindigkeitssollwerts und des Geschwindigkeitsistwerts v erfolgt mit einem ersten Geschwindigkeitsregeltakt. Mit jedem derartigen Takt nimmt der erste Geschwindigkeitsregler 9 also einen neuen resultierenden Geschwindigkeitssollwert und einen neuen Geschwindigkeitsistwert v des Maschinenelements 1 entgegen. Der erste Geschwindigkeitsregeltakt ist (in zeitlicher Hinsicht) höchstens so groß wie der Lageregeltakt. Er kann aber auch einen kleineren Wert aufweisen, beispielsweise halb so groß wie der Lageregeltakt sein.

Anhand des jeweiligen resultierenden Geschwindigkeitssollwerts und des jeweiligen Geschwindigkeitsistwerts v des Maschinenelements 1 ermittelt der erste Geschwindigkeitsregler 9 mit dem ersten Geschwindigkeitsregeltakt einen jeweiligen ersten Kraftsollwert F1* für den ersten Antrieb 2. Der erste Geschwindigkeitsregler 9 steuert den ersten Antrieb 2 in Abhängigkeit von dem jeweils ermittelten ersten Kraftsollwert F1* an.

Zum Ermitteln des jeweiligen Geschwindigkeitsistwerts v des Maschinenelements 1 kann die Reglerstruktur 7 beispielsweise einen Differenzierer 10 umfassen, dem der jeweilige Lageistwert x des Maschinenelements 1 zugeführt wird und der durch Differenzieren des jeweiligen Lageistwerts x des Maschinenelements 1 den jeweiligen Geschwindigkeitsistwert v des Maschinenelements 1 ermittelt. Alternativ kann der jeweilige Geschwindigkeitsistwert v des Maschinenelements 1 auf andere Weise ermittelt werden oder direkt messtechnisch erfasst werden.

Zum Ermitteln des jeweiligen resultierenden Geschwindigkeitssollwerts weist die Reglerstruktur 7 eine erste Ermittlungseinrichtung 11 auf. Die erste Ermittlungseinrichtung 11 nimmt vom Lageregler 8 den jeweiligen Geschwindigkeitssollwert v* entgegen und ermittelt unter Verwendung des jeweiligen Geschwindigkeitssollwerts v* den jeweiligen resultierenden Geschwindigkeitssollwert. Den jeweiligen resultierenden Geschwindigkeitssollwert gibt die erste Ermittlungseinrichtung 11 an den ersten Geschwindigkeitsregler 9 aus. Die erste Ermittlungseinrichtung 11 arbeitet mit dem Lageregeltakt, dem ersten Geschwindigkeitsregeltakt oder einem zweiten Geschwindigkeitsregeltakt, auf den nachfolgend eingegangen wird.

Die Reglerstruktur 7 umfasst weiterhin einen zweiten Geschwindigkeitsregler 12. Der zweite Geschwindigkeitsregler 12 kann beispielsweise entsprechend der Darstellung in FIG 2 als PI-Regler ausgebildet sein, also als Proportional-Integral-Regler. Die erste Ermittlungseinrichtung 11 gibt den jeweiligen resultierenden Geschwindigkeitssollwert nicht nur an den ersten Geschwindigkeitsregler 9 aus, sondern auch an den zweiten Geschwindigkeitsregler 12. Soweit erforderlich, wird in einem ersten Anpassungsblock 13 die Übersetzung i der Übersetzungseinrichtung 4 berücksichtigt. Der zweite Geschwindigkeitsregler 12 nimmt mit dem zweiten Geschwindigkeitsregeltakt jeweils den resultierenden Geschwindigkeitssollwert und einen Geschwindigkeitsistwert v2 des zweiten Antriebs 3 entgegen. Der zweite Geschwindigkeitsregeltakt ist (in zeitlicher Hinsicht) höchstens so groß wie der Lageregeltakt. Er kann aber auch einen kleineren Wert aufweisen, beispielsweise halb so groß wie der Lageregeltakt sein. In der Regel ist er gleich dem ersten Geschwindigkeitsregeltakt. Der jeweilige Geschwindigkeitsistwert v2 des zweiten Antriebs 3 kann sich vom jeweiligen Geschwindigkeitsistwert v des Maschinenelements 1 unterscheiden, weil die Erfassungsstelle für den Geschwindigkeitsistwert v2 des zweiten Antriebs 3 und den Geschwindigkeitsistwert v des Maschinenelements 1 entsprechend der Darstellung in FIG 2 an unterschiedlichen Enden der Übersetzungseinrichtung 4 befinden.

Der zweite Geschwindigkeitsregler 12 ermittelt anhand des jeweiligen resultierenden Geschwindigkeitssollwerts und des jeweiligen Geschwindigkeitsistwerts v2 des zweiten Antriebs 3 mit dem zweiten Geschwindigkeitsregeltakt einen jeweiligen zweiten Kraftsollwert F2* für den zweiten Antrieb 3. Der zweite Geschwindigkeitsregler 12 steuert den zweiten Antrieb 3 in Abhängigkeit von dem jeweils ermittelten zweiten Kraftsollwert F2* an. Indirekt steuert somit auch der Lageregler 8 den zweiten Antrieb 3 in Abhängigkeit von dem jeweiligen Lagesollwert x* und dem jeweiligen Lageistwert x an.

FIG 2 zeigt zugleich auch mehrere vorteilhafte Ausgestaltungen der erfindungsgemäßen Reglerstruktur 7. Diese Ausgestaltungen sind nur insofern zwingend miteinander kombiniert, als sie aufeinander aufbauen. Im Übrigen können sie unabhängig voneinander realisiert und nach Bedarf miteinander kombiniert werden. Die Ausgestaltungen werden nachstehend erläutert.

Im einfachsten Fall ist die erste Ermittlungseinrichtung 11 entartet. In diesem Fall ist der jeweilige resultierende Geschwindigkeitssollwert mit dem jeweiligen Geschwindigkeitssollwert v* identisch. Vorzugsweise nimmt die erste Ermittlungseinrichtung 11 jedoch entsprechend der Darstellung in FIG 2 mit ihrem Arbeitstakt auch einen jeweiligen Geschwindigkeits-Vorsteuerwert vV entgegen. Bei dem Arbeitstakt kann es sich um den Lageregeltakt oder um einen der Geschwindigkeitsregeltakte handeln. Der jeweilige Geschwindigkeits-Vorsteuerwert vV wird der ersten Ermittlungseinrichtung 11 von der übergeordneten Steuerung 6 vorgegeben. Die erste Ermittlungseinrichtung 11 ermittelt den jeweiligen resultierenden Geschwindigkeitssollwert als Summe des vom Lageregler 8 ermittelten jeweiligen Geschwindigkeitssollwerts v* und des jeweiligen Geschwindigkeit-Vorsteuerwerts vV.

Alternativ oder zusätzlich kann die Reglerstruktur 7 eine zweite Ermittlungseinrichtung 14 aufweisen. In diesem Fall nimmt die zweite Ermittlungseinrichtung 14 mit einem Vorsteuertakt von der übergeordneten Steuerung 6 jeweils einen Beschleunigungs-Vorsteuerwert aV entgegen. Der Vorsteuertakt kann mit dem Lageregeltakt oder einem der Geschwindigkeitsregeltakte übereinstimmen. Alternativ kann der Vorsteuertakt aber auch einen kleineren Wert aufweisen, beispielsweise halb so groß wie der zweite Geschwindigkeitsregeltakt sein.

Die zweite Ermittlungseinrichtung 14 ermittelt anhand des jeweiligen Beschleunigungs-Vorsteuerwerts aV zumindest einen ersten Kraft-Vorsteuerwert F1V für den ersten Antrieb 2. Die zweite Ermittlungseinrichtung 14 gibt den jeweiligen ersten Kraft-Vorsteuerwert F1V an eine erste Additionseinrichtung 15 aus. Die erste Additionseinrichtung 15 addiert den jeweiligen ersten Kraft-Vorsteuerwert F1V zum jeweiligen ersten Kraftsollwert F1*. Der erste Antrieb 2 wird somit entsprechend der Summe des jeweiligen ersten Kraft-Vorsteuerwerts F1V und des ersten Kraftsollwerts F1* angesteuert.

Vorzugsweise weist die zweite Ermittlungseinrichtung 14 eine Anpassungseinrichtung 16 auf, die den jeweiligen Beschleunigungs-Vorsteuerwert aV in einen vorläufigen Kraft-Vorsteuerwert umsetzt. Die Anpassungseinrichtung 16 berücksichtigt die Masse bzw. die Trägheit des Maschinenelements 1. Im einfachsten Fall ist die Funktion der Anpassungseinrichtung 16 lediglich eine Skalierung mit einer geeignet gewählten Konstante C.

Sodann ermittelt die zweite Ermittlungseinrichtung 14 den jeweiligen ersten Kraft-Vorsteuerwert F1V anhand des jeweiligen vorläufigen Kraft-Vorsteuerwerts. Insbesondere ist es möglich, dass die zweite Ermittlungseinrichtung 14 einen Hochpassfilter 17 implementiert, mittels dessen die zweite Ermittlungseinrichtung 14 den jeweiligen ersten Kraft-Vorsteuerwert F1V durch Hochpassfilterung des jeweiligen vorläufigen Kraft-Vorsteuerwerts ermittelt. Soweit erforderlich, kann in einem zweiten Anpassungsblock 18 die Übersetzung i der Übersetzungseinrichtung 4 berücksichtigt werden.

Zusätzlich kann die zweite Ermittlungseinrichtung 14 anhand des jeweiligen vorläufigen Kraft-Vorsteuerwerts einen jeweiligen zweiten Kraft-Vorsteuerwert F2V für den zweiten Antrieb 3 ermitteln. In diesem Fall gibt die zweite Ermittlungseinrichtung 14 den jeweiligen zweiten Kraft-Vorsteuerwert F2V an eine zweite Additionseinrichtung 19 aus. Die zweite Additionseinrichtung 19 bildet die Summe des jeweiligen zweiten Kraft-Vorsteuerwerts F2V und des jeweiligen zweiten Kraftsollwerts F2*. Der zweite Antrieb 3 wird somit entsprechend der genannten Summe angesteuert.

Es ist möglich, dass der jeweilige zweite Kraft-Vorsteuerwert F2V mit dem jeweiligen vorläufigen Kraft-Vorsteuerwert übereinstimmt. Vorzugsweise umfasst die zweite Ermittlungseinrichtung 14 jedoch einen Tiefpassfilter 20. In diesem Fall ermittelt die zweite Ermittlungseinrichtung 14 den jeweiligen zweiten Kraft-Vorsteuerwert F2V durch Tiefpassfilterung des jeweiligen vorläufigen Kraft-Vorsteuerwerts. Soweit erforderlich kann - analog zur Ermittlung des jeweiligen ersten Kraft-Vorsteuerwerts F1V - auch für die Ermittlung des jeweiligen zweiten Kraft-Vorsteuerwerts F2V in einem dritten Anpassungsblock 21 die Übersetzung i der Übersetzungseinrichtung 4 berücksichtigt werden.

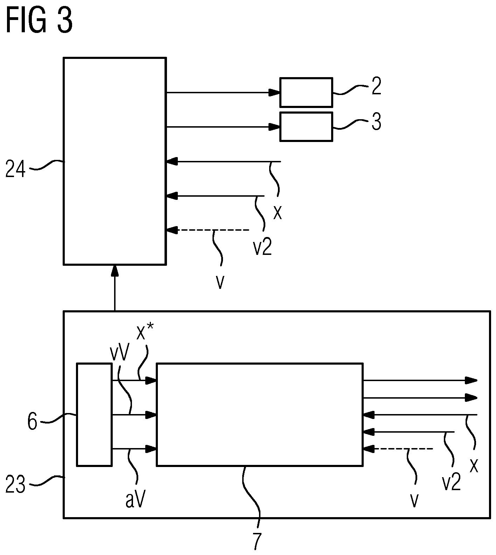

Es ist möglich, dass die Reglerstruktur 7 in Hardware aufgebaut ist. Vorzugsweise handelt es sich schon bei der Reglerstruktur 7 jedoch entsprechend der Darstellung in FIG 3 um einen Softwareblock 22. Der Softwareblock 22 kann in diesem Fall Bestandteil eines Computerprogramms 23 sein. Das Computerprogramm 23 umfasst in diesem Fall Maschinencode, der von einer Steuereinrichtung 24 ausführbar ist. Die Steuereinrichtung 24 wird in diesem Fall mit dem Computerprogramm 23 programmiert. Sie realisiert in diesem Fall einheitlich sowohl die Funktionalität der übergeordneten Steuerung 6 als auch der Reglerstruktur 7.

Die Reglerstruktur 7 arbeitet also getaktet, d.h dass sie mit dem jeweiligen Takt ihre Variablen entgegennimmt. Sofern der Reglerstruktur 7 zusätzlich weitere Größen als Variable vorgegeben werden, werden auch diese Größen der Reglerstruktur 7 mit ihrem jeweiligen Takt vorgegeben. Als Variable kommen insbesondere der Lagesollwert x* und der Lageistwert sowie gegebenenfalls der Geschwindigkeitsistwert v des Maschinenelements 1, der Geschwindigkeits-Vorsteuerwert vV und der Beschleunigungs-Vorsteuerwert aV in Frage.

Die mittels der Reglerstruktur 7 ermittelten Größen können aber auch von Parametern abhängig sein. Parameter sind jedoch keine Variable. Parameter sind Größen, die der Reglerstruktur 7 im Rahmen ihrer Inbetriebsetzung vorab einmalig vorgegeben werden und die danach im laufenden Betrieb nicht mehr geändert werden. Parameter können beispielsweise Proportional-Verstärkungsfaktoren des Lagereglers 8 und der Geschwindigkeitsregler 9, 12 und eine Integrationszeitkonstante des zweiten Geschwindigkeitsreglers 12 sein.

Die Ausgestaltung der Reglerstruktur 7 wurde obenstehend in Verbindung mit einem translatorisch bewegten Maschinenelement 1, einem ebenfalls translatorisch bewegten ersten Antrieb 2 und einem rotatorisch bewegten zweiten Antrieb 3 erläutert. Die Reglerstruktur 7 ist jedoch in völlig analoger Weise auch realisierbar, wenn das Maschinenelement 1 rotatorisch bewegt wird und/oder der erste Antrieb 2 rotatorisch bewegt wird und/oder der zweite Antrieb 3 translatorisch bewegt wird. In diesem Fall müssten lediglich nach Bedarf translatorische Größen und korrespondierende rotatorische Größen verwendet werden, beispielsweise nach Bedarf Geschwindigkeitsollwerte oder Drehgeschwindigkeitssollwerte. Der strukturelle Aufbau der Reglerstruktur 7 wird hiervon nicht beeinflusst.

Weiterhin wurde die vorliegende Erfindung obenstehend in Verbindung mit einer übergeordneten Steuerung 6 und einer einzelnen Reglerstruktur 7 erläutert, wobei über die Reglerstruktur 7 ein einzelnes Maschinenelement 1 beeinflusst wird. Die vorliegende Erfindung ist jedoch ebenso anwendbar, wenn mehrere Maschinenelemente 1 über jeweils einen ersten Antrieb 2 und einen zweiten Antrieb 3 beeinflusst werden sollen. In diesem Fall kann die übergeordnete Steuerung 6 einheitlich für mehrere Maschinenelemente 1 vorhanden sein. Die jeweilige Reglerstruktur 7 ist jedoch individuell für das jeweilige Maschinenelement 1 vorhanden.

Zusammengefasst betrifft die vorliegende Erfindung somit folgenden Sachverhalt:
Ein erster Antrieb 2 wirkt direkt auf ein Maschinenelement 1, ein zweiter Antrieb 3 über eine Übersetzungseinrichtung 4. Ein Lageregler 8 nimmt einen Lagesollwert x* und einen Lageistwert x des Maschinenelements 1 entgegen und ermittelt anhand dieser Größen x*, x einen Geschwindigkeitssollwert v* für das Maschinenelement 1. Eine erste Ermittlungseinrichtung 11 nimmt den Geschwindigkeitssollwert v* entgegen und ermittelt unter Verwendung des Geschwindigkeitssollwerts v* einen resultierenden Geschwindigkeitssollwert. Ein erster Geschwindigkeitsregler 9 ermittelt anhand des resultierenden Geschwindigkeitssollwerts und des Geschwindigkeitsistwerts v des Maschinenelements 1 einen ersten Kraftsollwert F1* und steuert den ersten Antrieb 2 in Abhängigkeit von diesem Kraftsollwert F1* an. Ein zweiter Geschwindigkeitsregler 12 ermittelt anhand des resultierenden Geschwindigkeitssollwerts und des Geschwindigkeitsistwerts v des zweiten Antriebs 3 einen zweiten Kraftsollwert F2* und steuert den zweiten Antrieb 3 in Abhängigkeit von diesem Kraftsollwert F2* an.

Die vorliegende Erfindung weist viele Vorteile auf. Insbesondere arbeiten - bis auf die Anpassung der Übersetzung i der Übersetzungseinrichtung 4 - beide Geschwindigkeitsregler 9, 12 mit derselben Führungsgröße. Durch die Ausgestaltung des ersten Geschwindigkeitsreglers 9 als Proportionalregler wird vermieden, dass sich für den ersten Antrieb 2 eine statische Kraft aufbauen kann. Die Dämpfung von Schwingungen des Maschinenelements 1 wird hierdurch hingegen nicht negativ beeinflusst. Hierfür ist ein P-Regler völlig ausreichend. Die erfindungsgemäßen Lösungen sind robust und kostengünstig realisierbar.

## Patentansprüche

1. Reglerstruktur für einen ersten und einen zweiten Antrieb (2, 3), wobei der erste Antrieb (2) direkt auf ein Maschinenelement (1) wirkt und der zweite Antrieb (3) über eine Übersetzungseinrichtung (4) auf das Maschinenelement (1) wirkt,
- wobei die Reglerstruktur einen Lageregler (8) umfasst, der mit einem Lageregeltakt jeweils einen Lagesollwert (x*) und einen Lageistwert (x) des Maschinenelements (1) entgegennimmt und den zweiten Antrieb (3) in Abhängigkeit von dem jeweiligen Lagesollwert (x*) und dem jeweiligen Lageistwert (x) ansteuert,
- wobei die Reglerstruktur einen ersten Geschwindigkeitsregler (9) umfasst, der mit einem ersten Geschwindigkeitsregeltakt jeweils einen resultierenden Geschwindigkeitssollwert und einen Geschwindigkeitsistwert (v) des Maschinenelements (1) entgegennimmt, anhand des jeweiligen resultierenden Geschwindigkeitssollwerts und des jeweiligen Geschwindigkeitsistwerts (v) des Maschinenelements (1) jeweils einen ersten Kraftsollwert (F1*) für den ersten Antrieb (2) ermittelt und den ersten Antrieb (2) in Abhängigkeit von dem jeweiligen ersten Kraftsollwert (F1*) ansteuert,
- wobei die Reglerstruktur eine erste Ermittlungseinrichtung (11) aufweist, die den jeweiligen resultierenden Geschwindigkeitssollwert ermittelt und an den ersten Geschwindigkeitsregler (9) ausgibt,
- wobei der Lageregler (8) anhand des jeweiligen Lagesollwerts (x*) und des jeweiligen Lageistwerts (x) jeweils einen Geschwindigkeitssollwert (v*) für das Maschinenelement (1) ermittelt und den jeweiligen Geschwindigkeitssollwert (v*) als Ausgangssignal ausgibt,
- wobei die Reglerstruktur einen zweiten Geschwindigkeitsregler (12) umfasst, der mit einem zweiten Geschwindigkeitsregeltakt jeweils den resultierenden Geschwindigkeitssollwert und einen Geschwindigkeitsistwert (v2) des zweiten Antriebs (3) entgegennimmt, anhand des jeweiligen resultierenden Geschwindigkeitssollwerts und des jeweiligen Geschwindigkeitsistwerts (v2) des zweiten Antriebs (3) jeweils einen zweiten Kraftsollwert (F2*) für den zweiten Antrieb (3) ermittelt und den zweiten Antrieb (3) in Abhängigkeit von dem jeweiligen zweiten Kraftsollwert (F2*) ansteuert,
- wobei die erste Ermittlungseinrichtung (11) den jeweiligen Geschwindigkeitssollwert (v*) entgegennimmt und unter Verwendung des jeweiligen Geschwindigkeitssollwerts (v*) den resultierenden Geschwindigkeitssollwert ermittelt und
- wobei die erste Ermittlungseinrichtung (11) den jeweiligen resultierenden Geschwindigkeitssollwert zusätzlich zum ersten Geschwindigkeitsregler (9) auch an den zweiten Geschwindigkeitsregler (12) ausgibt.

2. Reglerstruktur nach Anspruch 1,
**dadurch gekennzeichnet,**
**dass** die erste Ermittlungseinrichtung (11) weiterhin einen jeweiligen Geschwindigkeits-Vorsteuerwert (vV) entgegennimmt und den jeweils resultierenden Geschwindigkeitssollwert als Summe des jeweiligen Geschwindigkeitssollwerts (v*) und des jeweiligen Geschwindigkeit-Vorsteuerwerts (vV) ermittelt.

3. Reglerstruktur nach Anspruch 1 oder 2,
**dadurch gekennzeichnet,**
**dass** die Reglerstruktur eine zweite Ermittlungseinrichtung (14) aufweist, die mit einem Vorsteuertakt jeweils einen Beschleunigungs-Vorsteuerwert (aV) entgegennimmt, anhand des jeweiligen Beschleunigungs-Vorsteuerwerts (aV) einen jeweiligen ersten Kraft-Vorsteuerwert (F1V) für den ersten Antrieb (2) ermittelt und den jeweiligen ersten Kraft-Vorsteuerwert (F1V) an eine erste Additionseinrichtung (15) ausgibt, welche den jeweiligen ersten Kraft-Vorsteuerwert (F1V) zum jeweiligen ersten Kraftsollwert (F1*) addiert, so dass der erste Antrieb (2) entsprechend der Summe des jeweiligen ersten Kraft-Vorsteuerwerts (F1V) und des jeweiligen ersten Kraftsollwerts (F1*) angesteuert wird.

4. Reglerstruktur nach Anspruch 3,
**dadurch gekennzeichnet,**
- **dass** die zweite Ermittlungseinrichtung (14) eine Anpassungseinrichtung (16) aufweist, die den jeweiligen Beschleunigungs-Vorsteuerwert (aV) in einen vorläufigen Kraft-Vorsteuerwert umsetzt, und
- **dass** die zweite Ermittlungseinrichtung (14) den jeweiligen ersten Kraft-Vorsteuerwert (F1V) anhand des jeweiligen vorläufigen Kraft-Vorsteuerwerts ermittelt.

5. Reglerstruktur nach Anspruch 4,
**dadurch gekennzeichnet ,**
**dass** die zweite Ermittlungseinrichtung (14) den jeweiligen ersten Kraft-Vorsteuerwert (F1V) durch Hochpassfilterung des jeweiligen vorläufigen Kraft-Vorsteuerwerts ermittelt.

6. Reglerstruktur nach Anspruch 4 oder 5,
**dadurch gekennzeichnet,**
**dass** die zweite Ermittlungseinrichtung (14) anhand des jeweiligen vorläufigen Kraft-Vorsteuerwerts einen jeweiligen zweiten Kraft-Vorsteuerwert (F2V) für den zweiten Antrieb (3) ermittelt und den jeweiligen zweiten Kraft-Vorsteuerwert (F2V) an eine zweite Additionseinrichtung (19) ausgibt, welche den jeweiligen zweiten Kraft-Vorsteuerwert (F2V) zum jeweiligen zweiten Kraftsollwert (F2*) addiert, so dass der zweite Antrieb (3) entsprechend der Summe des jeweiligen zweiten Kraft-Vorsteuerwerts (F2V) und des jeweiligen zweiten Kraftsollwerts (F2*) angesteuert wird.

7. Reglerstruktur nach Anspruch 6,
**dadurch gekennzeichnet,**
**dass** die zweite Ermittlungseinrichtung (14) den jeweiligen zweiten Kraft-Vorsteuerwert (F2V) durch Tiefpassfilterung des jeweiligen vorläufigen Kraft-Vorsteuerwerts ermittelt.

8. Steuereinrichtung für einen ersten und einen zweiten Antrieb (2, 3), wobei der erste Antrieb (2) direkt auf ein Maschinenelement (1) wirkt und der zweite Antrieb (3) über eine Übersetzungseinrichtung (4) auf das Maschinenelement (1) wirkt,
- wobei die Steuereinrichtung eine übergeordnete Steuereinrichtung (6) und eine Reglerstruktur (7) aufweist,
- wobei die übergeordnete Steuereinrichtung (6) der Reglerstruktur (7) mit einem Lageregeltakt Lagesollwerte (x*) vorgibt,
**dadurch gekennzeichnet,**
**dass** die Reglerstruktur (7) als Reglerstruktur (7) nach einem der obigen Ansprüche ausgebildet ist.

9. Maschine,
- wobei die Maschine ein Maschinenelement (1), einen ersten Antrieb (2), einen zweiten Antrieb (3) und eine Übersetzungseinrichtung (4) aufweist,
- wobei der erste Antrieb (2) direkt auf das Maschinenelement (1) wirkt und der zweite Antrieb (3) über die Übersetzungseinrichtung (4) auf das Maschinenelement (1) wirkt,
- wobei der erste Antrieb (2) und der zweite Antrieb (3) von einer Steuereinrichtung (24) nach Anspruch 8 gesteuert werden.
- wobei die Maschine eine Steuereinrichtung nach Anspruch 8 umfasst, welche dazu ausgebildet ist, den ersten und den zweiten Antrieb zu steuern.

10. Maschine nach Anspruch 9,
**dadurch gekennzeichnet,**
**dass** die Maschine als Werkzeugmaschine, als Produktionsmaschine oder als Roboter ausgebildet ist.

## Claims

1. Controller structure for a first and a second drive (2, 3), wherein the first drive (2) acts directly on a machine element (1) and the second drive (3) acts directly on the machine element (1) via a speed-changing device (4),
- wherein the controller structure includes a position controller (8), which in each case receives a position setpoint value (x*) and a position actual value (x) of the machine element (1) with a position-control clock pulse and controls the second drive (3) depending on the respective position setpoint value (x*) and the respective position actual value (x),
- wherein the controller structure includes a first speed controller (9), which in each case receives a resulting speed setpoint value and a speed actual value (v) of the machine element (1) with a first speed-control clock pulse, in each case determines a first force setpoint value (F1*) for the first drive (2) on the basis of the respective resulting speed setpoint value and the respective speed actual value (v) of the machine element (1) and controls the first drive (2) depending on the respective first force setpoint value (F1*),
- wherein the controller structure comprises a device (11), which determines the respective resulting speed setpoint value and outputs this to the first speed controller (9),
- wherein the position controller (8) in each case determines a speed setpoint value (v*) for the machine element (1) on the basis of the respective position setpoint value (x*) and the respective position actual value (x) and outputs the respective speed setpoint value (v*) as an output signal,
- wherein the controller structure includes a second speed controller (12), which in each case receives the resulting speed setpoint value and a speed actual value (v2) of the second drive (3) with a second speed-control clock pulse, in each case determines a second force setpoint value (F2*) for the second drive (3) on the basis of the respective resulting speed setpoint value and the respective speed actual value (v2) of the second drive (3) and controls the second drive (3) depending on the respective second force setpoint value (F2*),
- wherein the first determining device (11) receives the respective speed setpoint value (v*) and determines the resulting speed setpoint value using the respective speed setpoint value (v*) and
- wherein the first determining device (11) also outputs the respective resulting speed setpoint value to the second speed controller (12) in addition to the first speed controller (9).

2. Controller structure according to claim 1,
**characterised in that**
the first determining device (11) furthermore receives a respective speed pre-control value (vV) and determines the resulting speed setpoint value in each case as the sum of the respective speed setpoint value (v*) and the respective speed pre-control value (vV).

3. Controller structure according to claim 1 or 2,
**characterised in that**
the controller structure comprises a second determining device (14), which in each case receives an acceleration pre-control value (aV) with a pre-control clock pulse, determines a respective first force pre-control value (F1V) for the first drive (2) on the basis of the respective acceleration pre-control value (aV) and outputs the respective first force pre-control value (F1V) to a first addition device (15), which adds the respective first force pre-control value (F1V) to a respective first force setpoint value (F1*) so that the first drive (2) is controlled in accordance with the sum of the respective first force pre-control value (F1V) and the respective first force setpoint value (F1*).

4. Controller structure according to claim 3,
**characterised in that**
- that the second determining device (14) comprises an adjusting device (16), which converts the respective acceleration pre-control value (aV) into a provisional force pre-control value and
- that the second determining device (14) determines the respective first force pre-control value (F1V) on the basis of the respective provisional force pre-control value.

5. Controller structure according to claim 4,
**characterised in that**
the second determining device (14) determines the respective first force pre-control value (F1V) by high-pass filtering of the respective provisional force pre-control value.

6. Controller structure according to claim 4 or 5,
**characterised in that**
the second determining device (14) determines a respective second force pre-control value (F2V) for the second drive (3) on the basis of the respective provisional force pre-control value and outputs the respective second force pre-control value (F2V) to a second addition device (19), which adds the respective second force pre-control value (F2V) to the respective second force setpoint value (F2*) so that the second drive (3) is controlled in accordance with the sum of the respective second force pre-control value (F2V) and the respective second force setpoint value (F2*).

7. Controller structure according to claim 6,
**characterised in that**
the second determining device (14) determines the respective second force pre-control value (F2V) by low-pass filtering of the respective provisional force pre-control value.

8. Control device for a first and a second drive (2, 3), wherein the first drive (2) acts directly on a machine element (1) and the second drive (3) acts directly on the machine element (1) via a speed-changing device (4),
- wherein the control device comprises a higher-ranking control device (6) and a controller structure (7),
- wherein the higher-ranking control device (6) specifies position setpoint values (x*) to the controller structure (7) with a position-control clock pulse,
**characterised in that**
the controller structure (7) is embodied as controller structure (7) according to one of the above claims.

9. Machine,
- wherein the machine comprises a machine element (1), a first drive (2), a second drive (3) and a speed-changing device (4),
- wherein the first drive (2) acts directly on the machine element (1) and the second drive (3) acts directly on the machine element (1) via the speed-changing device (4),
- wherein the first drive (2) and the second drive (3) are controlled by a control device (24) according to claim 8,
- wherein the machine includes a control device according to claim 8, which is embodied to control the first and the second drive.

10. Machine according to claim 9,
**characterised in that**
the machine is embodied as a machine tool, as a production machine or as a robot.

## Revendications

1. Structure de régulateur pour un premier et un deuxième entraînement (2, 3), le premier entraînement (2) agissant directement sur un élément (1) de machine et le deuxième entraînement (3) agissant sur l'élément (1) de machine par l 'intermédiaire d'un dispositif (4) de démultiplication,
- dans laquelle la structure de régulateur comprend un régulateur (8) de position, qui reçoit à une cadence de régulation de position respectivement une valeur (x*) de consigne de position et une valeur (x) réelle de position de l 'élément (1) de machine et commande le deuxième entraînement (3) en fonction de la valeur (x*) de consigne de position respective et de la valeur (x) réelle de position respective,
- dans laquelle la structure de régulateur comprend un premier régulateur (9) de vitesse qui, à une première cadence de régulation de vitesse, reçoit respectivement une valeur de consigne de vitesse résultante et une valeur (v) réelle de vitesse de l'élément de machine, détermine à l'aide de la valeur de consigne de vitesse résultante respective et de la valeur (v) réelle de vitesse respective de l'élément (1) de machine respectivement une première valeur (F1*) de consigne de force pour le premier entraînement (2) et commande le premier entraînement (2) en fonction de la première valeur (F1*) de consigne de force respective,
- dans laquelle la structure de régulateur a un premier dispositif (11) de détermination, qui détermine la valeur de consigne de vitesse résultante respective et la donne au premier régulateur (9) de vitesse,
- dans laquelle le régulateur (8) de position détermine, à l 'aide de la valeur (x*) de consigne de position respective et de la valeur (x) réelle de position respective, respectivement une valeur (v*) de consigne de vitesse pour l'élément (1) de machine et émet la valeur (v*) de consigne de vitesse respective comme signal de sortie,
- dans laquelle la structure de régulateur comprend un deuxième régulateur (12) de vitesse qui, à une deuxième cadence de régulation de vitesse, reçoit respectivement la valeur de consigne de vitesse résultante et une valeur (v2) réelle de vitesse du deuxième entraînement (3), détermine, à l 'aide de la valeur de consigne de vitesse résultante respective et de la valeur (v2) réelle de vitesse respective du deuxième entraînement (3), respectivement une deuxième valeur (F2*) de consigne de force pour le deuxième entraînement (3) et commande le deuxième entraînement (3) en fonction de la deuxième valeur (F2*) de consigne de force respective,
- dans laquelle le premier dispositif (11) de détermination reçoit la valeur (v*) de consigne de vitesse respective et, en utilisant la valeur (v*) de consigne de vitesse respective détermine la valeur de consigne de vitesse résultante et
- dans laquelle le premier dispositif (11) de détermination donne la valeur de consigne de vitesse résultante respective, supplémentairement au premier régulateur (9) de vitesse, également au deuxième régulateur (12) de vitesse.

2. Structure de régulateur suivant la revendication 1,
**caractérisée**
**en ce que** le premier dispositif (11) de détermination reçoit en outre une valeur (vV) pilote de vitesse et détermine la valeur de consigne de vitesse résultante respectivement comme somme de la valeur (v*) de consigne de vitesse respective et de la valeur (vV) pilote de vitesse respective.

3. Structure de régulateur suivant la revendication 1 ou 2,
**caractérisée**
**en ce que** la structure de régulateur a un deuxième dispositif (14) de détermination qui, à une cadence pilote, reçoit respectivement une valeur (aV) pilote d'accélération, détermine, à l'aide de la valeur (aV) pilote d'accélération respective, une première valeur (F1V) pilote de force respective pour le premier entraînement (2) et donne la première valeur (F1V) pilote de force respective à un premier dispositif (15) additionneur, qui additionne la première valeur (F1V) pilote de force respective à la première valeur (F1*) de consigne de force respective, de manière à commander le premier entraînement (2) conformément à la somme de la première valeur (F1V) pilote de force respective et de la première valeur (F1*) de consigne de force respective.

4. Structure de régulateur suivant la revendication 3,
**caractérisée**
- **en ce que** le deuxième dispositif (14) de détermination a un dispositif (16) d'adaptation, qui transforme la valeur (aV) pilote d'accélération respective en une valeur pilote de force provisoire, et
- **en ce que** le deuxième dispositif (14) de détermination détermine la première valeur (F1V) pilote de force à l'aide de la valeur pilote de force provisoire respective.

5. Structure de régulateur suivant la revendication 4,
**caractérisée**
**en ce que** le deuxième dispositif (14) de détermination détermine la première valeur (F1V) pilote de force respective par filtrage passe haut de la valeur pilote de force provisoire respective.

6. Structure de régulateur suivant la revendication 4 ou 5,
**caractérisée**
**en ce que** le deuxième dispositif (14) de détermination détermine, à l'aide de la valeur pilote de force provisoire respective, une deuxième valeur (F2V) pilote de force respective pour le deuxième entraînement (3) et donne la deuxième valeur (F2V) pilote de force respective à un deuxième dispositif (19) additionneur, qui additionne la deuxième valeur (F2V) pilote de force respective à la deuxième valeur (F2*) de consigne de force respective de manière à commander le deuxième entraînement (3) conformément à la somme de la deuxième valeur (F2V) pilote de force respective et de la deuxième valeur (F2*) consigne de force respective.

7. Structure de régulateur suivant la revendication 6,
**caractérisée**
**en ce que** le deuxième dispositif (14) de détermination détermine la deuxième valeur (F2V) pilote de force respective par filtrage passe bas de la valeur pilote de force provisoire respective.

8. Dispositif de commande d'un premier et d'un deuxième entraînement (2, 3), le premier entraînement (2) agissant directement sur un élément (1) de machine et le deuxième entraînement (3) agissant sur l'élément (1) de machine par un dispositif (4) de démultiplication,
- dans lequel le dispositif de commande a un dispositif (6) de commande supérieur hiérarchiquement et une structure (7) de régulateur,
- dans lequel le dispositif (6) de commande supérieur hiérarchiquement prescrit à la structure (7) de régulateur des valeurs (x*) de consigne de position à une cadence de régulation de position,
**caractérisé en ce que** la structure (7) de régulateur est constituée en structure (7) de régulateur suivant l'une des revendications précédentes.

9. Machine,
- dans laquelle la machine a un élément (1) de machine, un premier entraînement (2), un deuxième entraînement (3) et un dispositif (4) de démultiplication,
- dans laquelle le premier entraînement (2) agit directement sur l'élément (1) de machine et le deuxième entraînement (3) agit sur l'élément (1) de machine par le dispositif (4) de démultiplication,
- dans laquelle le premier entraînement (2) et le deuxième entraînement (3) sont commandés par un dispositif (24) de commande suivant la revendication 8,
- dans laquelle la machine comprend un dispositif de commande suivant la revendication 8, qui est constituée pour commander le premier et le deuxième entraînement.

10. Machine suivant la revendication 9,
**caractérisée**
**en ce que** la machine est constituée sous la forme d'une machine -outil, d'une machine de production ou d'un robot.
